# EUROPÄISCHE PATENTSCHRIFT

(11) **EP 1 219 017 B1**
(45) Veröffentlichungstag und Bekanntmachung des Hinweises auf die Patenterteilung: **30.11.2005**
(21) Anmeldenummer: 00963960.0
(22) Anmeldetag: 06.09.2000
(51) Int. Cl.: H02P 7/29

(54) **ELEKTRONISCH KOMMUTIERBARER MOTOR MIT ÜBERLASTSCHUTZ**
ELECTRONICALLY SWITCHABLE MOTOR WITH OVERLOAD PROTECTION
MOTEUR A COMMUTATION ELECTRONIQUE AVEC PROTECTION CONTRE LA SURCHARGE

(30) Priorität: 15.09.1999 DE 19944194
(43) Veröffentlichungstag der Anmeldung: 03.07.2002
(73) Patentinhaber: ROBERT BOSCH GMBH, 70442 Stuttgart (DE)
(72) Erfinder: SUTTER, Joerg, 76571 Gaggenau (DE); SCHWENK, Wolfgang, 77704 Oberkirch-Tiergarten (DE); BERLING, Claude, 67410 Drusenheim (FR)
(86) Internationale Anmeldenummer: PCT/DE2000/003055
(87) Internationale Veröffentlichungsnummer: WO 2001/020768

(56) Entgegenhaltungen:
- EP-A- 0 413 942
- DE-A- 4 444 810
- DE-A- 4 444 811

## Beschreibung

### Stand der Technik

Die Erfindung betrifft einen elektronisch kommutierbaren Motor, dessen Endstufen über eine elektronische Steuereinheit mittels PWM-Steuersignalen ansteuerbar und von einer Versorgungsspannung speisbar sind, wobei in Abhängigkeit von der Größe der Versorgungsspannung und eines vorgegebenen Sollwertes für die PWM-Steuersignale die Pulsweite der PWM-Steuersignale derart reduzierbar ist, dass der Motor vor Überlastung geschützt ist.

Bei den Motoren dieser Art übernimmt die elektronische Steuereinheit die Bestromung der Endstufen des Motors, die in der Regel aus Halbleiter-Schaltern und Wicklungen bestehen. Die Steuereinheit wird üblicherweise auf die Eckbetriebsbedingungen ausgelegt. Treibt der Motor z.B. einen Lüfter an, dann steigt der Strom quadratisch mit der Drehzahl des Motors an, während die Motordrehzahl linear mit der Versorgungsspannung ansteigt. Werden derartige Lüfter in einem Kraftfahrzeug eingesetzt und von dessen Batterie gespeist, dann werden die Motoren auf eine Nennspannung von z.B. 13V ausgelegt, sie müssen aber bis zu einer Spannung von z.B. 16V betriebssicher sein und funktionieren. Bei der Nennspannung muss der Lüfter die geforderte Luftleistung bringen. Bei höherer Batteriespannung zur Verfügung stehende höhere Luftleistung ist daher überflüssig. Diese Vorgaben bedingen aber, dass der Motor und die elektronischen Bauteile für die hohen Leistungen bei 16V ausgelegt sein müssen.

Die DE 44 44 810 offenbart einen elektronisch kommutierbaren Motor, dessen Endstufen über eine elektronische Steuereinheit mittels PWM-Steuersignalen ansteuerbar und von einer Versorgungsspannung speisbar sind. Dabei wird das Tastverhältnis des PWM-Steuersignals so geregelt, dass die Motordrehzahl unabhängig von der Versorgungsspannung konstant bleibt. Fällt beispielsweise die Versorgungsspannung unter die Nennspannung des Motors, so wird das Tastverhältnis des PWM-Steuersignals so weit heraufgesetzt, so dass die Motordrehzahl nicht von der Soll-Drehzahl abweicht.

Die EP 413 942 A2 offenbart einen elektronisch kommutierbaren Motor, bei dem ebenfalls die Pulsweite eines PWM-Steuersignals so geregelt wird, dass die Drehzahl des Motors konstant bleibt.

Die dem genannten Stand der Technik zu Grunde liegenden Maßnahmen haben nicht das Ziel, einen Motor gegen Überlast zu schützen.

Es ist Aufgabe der Erfindung, einen elektronisch kommutierbaren Motor der eingangs erwähnten Art so auszulegen, dass dieser mit seinen elektronischen Bauelementen auf die durch die Nennspannung vorgegebene Belastung begrenzt und gegen Überlastung geschützt sind, auch wenn die Versorgungsspannung die Nennspannung übersteigt.

Diese Aufgabe wird nach der Erfindung dadurch gelöst, dass bis zu einer Nennspannung der Versorgungsspannung die Betriebs-PWM-Steuersignale für die Endstufen durch den vorgegebenen Betriebs-Sollwert bestimmt sind und dass erst beim Überschreiten dieser Nennspannung diese PWM-Steuersignale mit zunehmender Versorgungsspannung in der Pulsweite linear oder nichtlinear reduzierbar sind.

Mit dieser Beeinflussung der PWM-Steuersignale für die Endstufen des Motors ist erreicht, dass die maximale Belastung durch die Nennspannung und den maximalen Sollwert vorgegeben ist und selbst bei hohen Versorgungsspannungen nicht erhöht wird. Der Motor mit seinen elektronischen Bauteilen braucht daher nur für diese Belastung ausgelegt zu werden und ist gegen Überlastung geschützt.

Die Reduzierung der Pulsweite kann nach einer Ausgestaltung vorgenommen sein, dass die Reuzierung der Pulsweite mit zunehmend vorgegebenen Sollwert und steigender Versorgungsspannung mit größer werdendem Abfall erfolgt. Dabei wird im letzten Fall die Tatsache vorteilhaft ausgenutzt, dass bei kleinerem, vorgegebenem Sollwert die Belastung des Motors und seiner Bauteile durch die kleineren Ströme geringer ist.

Die Reduzierung der Pulsweite kann nach einer Ausgestaltung dadurch in die Steuereinheit einbezogen werden, dass der Steuereinheit eine Korrektureinheit zugeordnet ist, welche die entsprechend des vorgegebenen Sollwertes ermittelten PWM-Steuersignale für die Endstufen des Motors in Abhängigkeit von der Größe der Versorgungsspannung unverändert oder als reduzierte PWM-Steuersignale an die Endstufen des Motors weiterleitet, sowie dass bis zum Erreichen der Nennspannung des Motors die von der Steuereinheit aufgrund des vorgegebenen Sollwertes ermittelten PWM-Steuersignale für die Endstufen des Motors unverändert an diese weiterleitbar sind und erst mit zunehmender Versorgungsspannung entsprechend der Vorgabe durch die Korrektureinheit in der Pulsweite reduzierbar sind.

Die Korrektureinheit kann in die Steuereinheit integriert sein. Die Steuereinheit gilt dann schon in Abhängigkeit von der Größe der Versorgungsspannung die PWM-Steuersignale unverändert oder mit reduzierter Pulsweite an die Endstufen des Motors ab.

Anstelle der Versorgungsspannung kann bei dieser Schutzschaltung auch die Drehzahl des Motors erfaßt und zur Reduzierung der Pulsweite der PWM-Steuersignale verwendet werden. Zudem ist es im Rahmen der Erfindung auch beide Werte - die Versorgungsspannung und die Drehzahl - zur Reduzierung der Pulsweite der PWM-Steuersignale heranzuziehen.

Die Erfindung wird anhand eines in den Zeichnungen gezeigten Ausführungsbeispiels näher erläutert. Es zeigen:
- Fig. 1: im Blockschaltbild die Steuerung eines elektronisch kommutierbaren Motors mit Reduzierung der Pulsweite der PWM-Steuersignale,
- Fig. 2: die Motorkennlinien mit Leistungsbegrenzung,
- Fig. 3: das PWM-Steuersignal mit normaler und reduzierter Pulsweite,
- Fig. 4: den Verlauf der Pulsweite in Abhängigkeit von der Versorgungsspannung und
- Fig. 5: den Verlauf der Pulsweite in Abhängigkeit von der Versorgungsspannung bei verschieden vorgegebenen Sollwerten für die PWM-Steuersignale.

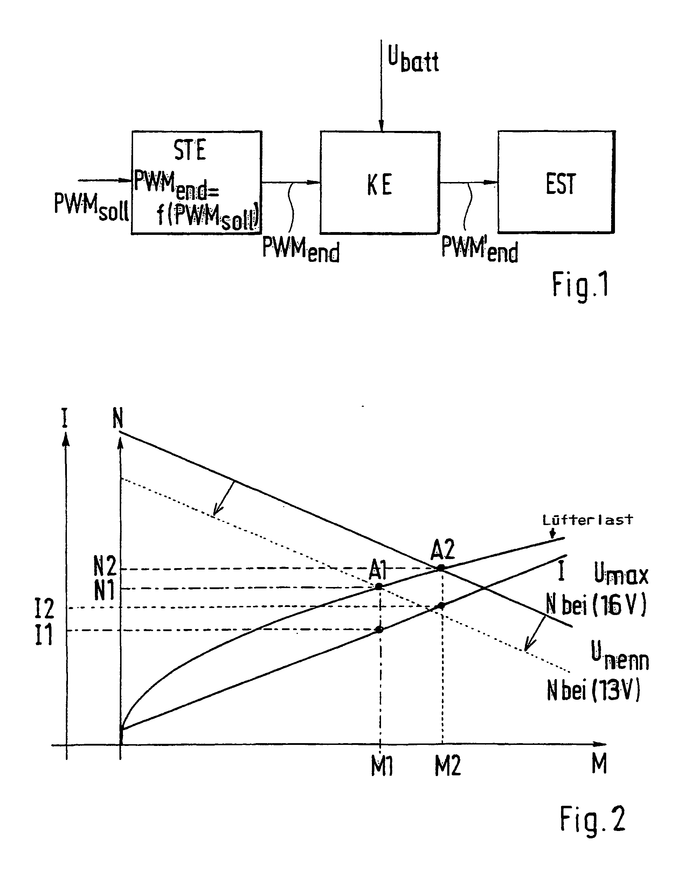

In Fig. 1 sind schematisch die für die Erfindung wesentlichen Einheiten des elektronisch kommutierbaren Motors dargestellt. Dies bedeutet jedoch keine konstruktive Trennung, sondern dient lediglich zur Erläuterung der Funktion.

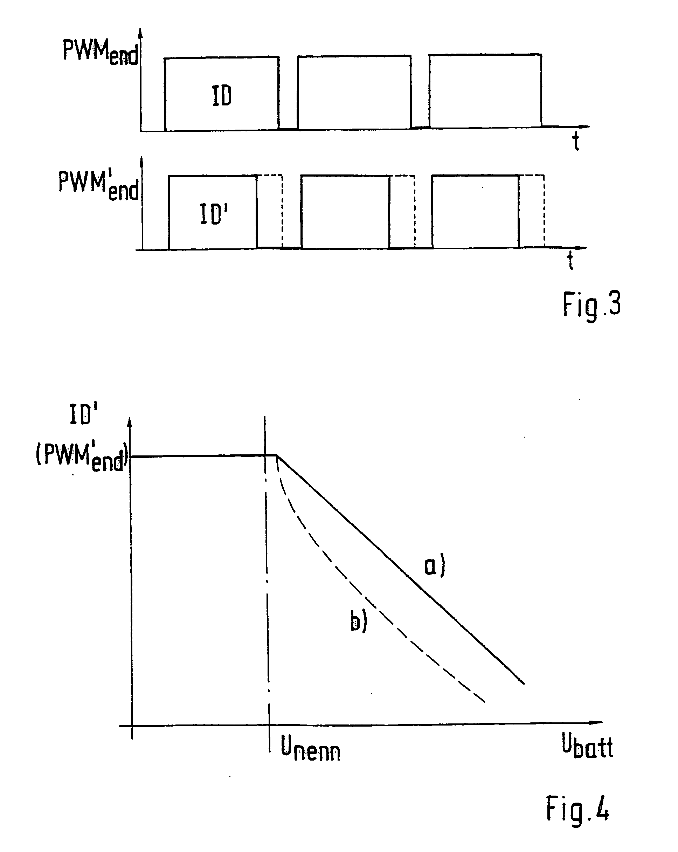

Der Steuereinheit STE wird ein Sollwert PWMₛₒₗₗ für die PWM-Steuersignale des Motors vorgegeben. Dieser kann z.B. mittels eines Potentiometers manuell vorgegeben werden und dient zur Vorgabe einer höheren oder niedrigeren Drehzahl für den vom Motor angetriebenen Lüfter. In der Steuereinheit STE ist die Motorkennlinie abgelegt, was mit der Funktion PWM_{end} = f (PWMₛₒₗₗ) angedeutet ist, wobei PWM_{end} dem PWM-Steuersignal für die Endstufen EST des Motors entspricht und schon die Pulsweite ID des Steuersignals nach Fig. 3 vorgibt.

Wie Fig. 2 zeigt, ergeben sich dabei für die Nennspannung Uₙₑₙₙ = 13 V und für die maximale Versorgungsspannung Uₘₐₓ = 16 V unterschiedliche Motorkennlinien I-f (M) und N = f (M) wobei I = Strom, M = Moment und N = Drehzahl bedeutet. Bei der Nennspannung Uₙₑₙₙ wird der maximale Arbeitspunkt A1 mit der maximalen Drehzahl N1, dem maximalen Strom I1 und dem maximalen Moment M1 als Grenzwert für Belastung vorgegeben. Würde sich die Versorgungsspannung auf den maximalen Wert Uₘₐₓ erhöhen, dann ergäbe sich ein maximaler Arbeitspunkt A2 mit dem maximalen Strom I2, der maximalen Drehzahl N2 und dem maximalen Moment M2. Damit der Motor und dessen elektronische Bauteile nicht auf diese maximalen Belastungen ausgelegt werden müssen, wird die Ansteuerung der Endstufen EST des Motors korrigiert, wie mit der Korrektureinheit KE in Fig. 1 angedeutet ist. Der von der Steuereinheit STE für den Sollwert PWMₛₒₗₗ ermittelte Wert PWM_{end} für das PWM-Steuersignal der Endstufen EST wird über die Korrektureinheit KE so verändert, dass der Arbeitspunkt A2 auf den Arbeitspunkt A1 zurückgeführt wird.

Dies erfolgt in Abhängigkeit von der Größe der Versorgungsspannung U_{batt}, wie das von der Korrektureinheit KE abgegebene PWM-Steuersignal PWM'_{end} anzeigt. Dabei wird, wie Fig. 3 zeigt, die Pulsweite ID auf die Pulsweite ID' reduziert und zwar etwa kurz nach dem Überschreiten der Nennspannung Uₙₑₙₙ, wie Fig. 4 zeigt, linear (a) oder nichtlinear (b) bei weiterem Ansteigen der Versorgungsspannung U_{batt}.

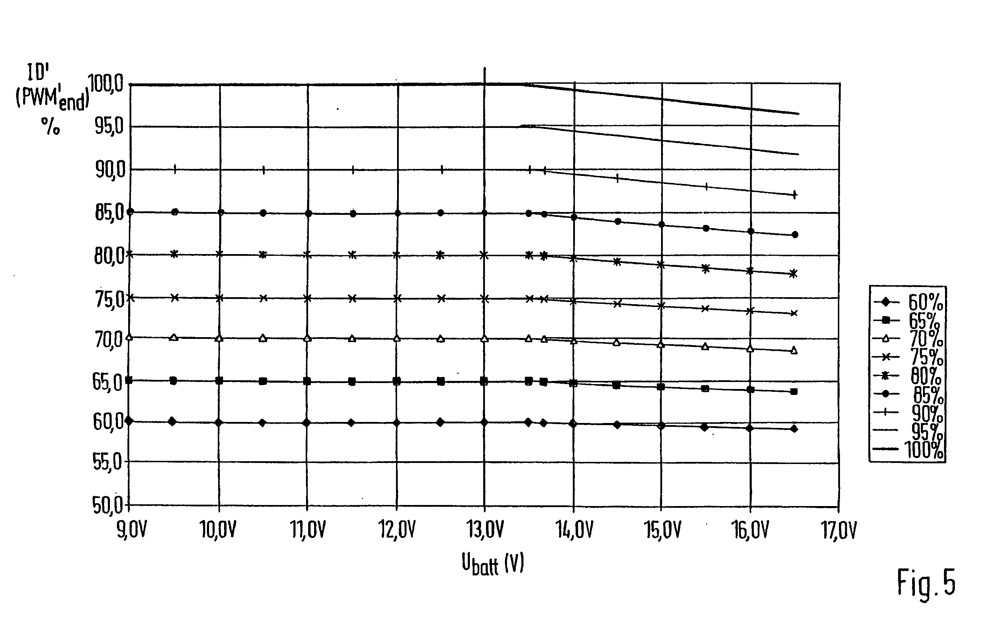

Dabei kann der Grad der Reduzierung auch noch mit dem vorgegebenen Sollwert PWMₛₒₗₗ variieren, wie die Fig. 5 zeigt. Bei kleinem Sollwert PWMₛₒₗₗ ist der Abfall der Reduzierung flacher als bei großem Sollwert, wie die verschiedenen Kurven der reduzierten Pulsweiten ID' der PWM-Steuersignale PWM'_{end} in Abhängigkeit von der Versorgungsspannung U_{batt} in Fig. 5 zeigen.

Es wird noch darauf hingewiesen, dass die Korrektur der Pulsweite ID auch von der Steuereinheit STE selbst ausgeführt werden kann und dass anstelle der Versorgungsspannung U_{batt} auch die Drehzahl N als Parameter für die Reduzierung der Pulsweite ID und/oder zusätzlich zur Versorgungsspannung U_{batt} verwendet werden kann.

## Patentansprüche

1. Elektronisch kommutierbarer Motor, dessen Endstufen (EST) über eine elektronische Steuereinheit (STE) mittels PWM-Steuersignalen ansteuerbar sind und von einer Versorgungsspannung (U_{batt}) gespeist sind, wobei in Abhängigkeit von der Größe der Versorgungsspannung (U_{batt}) und eines vorgegebenen Sollwertes (PWM_{Soll}) für die PWM-Steuersignale die Pulsweite (ID) der PWM-Steuersignale derart reduzierbar ist, dass der Motor vor Überlastung geschützt ist, **dadurch gekennzeichnet, dass** bis zu einer Nennspannung (Uₙₑₙₙ) der Versorgungsspannung (U_{batt}) die Betriebs-PWM-Steuersignale (PWM'_{end}) für die Endstufen (EST) durch den vorgegebenen Betriebs-Sollwert (PWMₛₒₗₗ) bestimmt sind und dass erst beim Überschreiten dieser Nennspannung (Uₙₑₙₙ) diese PWM-Steuersignale (PWM'_{end}) mit zunehmender Versorgungsspannung (U_{batt}) in der Pulsweite (ID) linear oder nichtlinear reduzierbar (PWM'_{end}) sind.

2. Elektronisch kommutierbarer Motor nach Anspruch 1, **dadurch gekennzeichnet, dass** die Reduzierung der Pulsweite (ID') mit zunehmend vorgegebenem Sollwert (PWM_{Soll}) und steigender Versorgungsspannung (U_{batt}) mit größer werdendem Abfall erfolgt.

3. Elektronisch kommutierbarer Motor nach einem der Ansprüche 1 bis 2, **dadurch gekennzeichnet, dass** der Steuereinheit (STE) eine Korrektureinheit (KE) zugeordnet ist, welche die entsprechend des vorgegebenen Sollwertes (PWM_{Soll}) ermittelten PWM-Steuersignale (PWM_{end}) für die Endstufen (EST) des Motors in Abhängigkeit von der Größe der Versorgungsspannung (U_{batt}) unverändert oder als reduzierte PWM-Steuersignale (PWM'_{end}) an die Endstufen (EST) des Motors weiterleitet.

4. Elektronisch kommutierbarer Motor nach Anspruch 3, **dadurch gekennzeichnet, dass** bis zum Erreichen der Nennspannung (Uₙₑₙₙ) des Motors (M) die von der Steuereinheit (STE) auf Grund des vorgegebenen Sollwertes (PWM_{Soll}) ermittelten PWM-Steuersignale (PWM_{end}) für die Endstufen (EST) des Motors unverändert an diese weiterleitbar sind und erst mit zunehmender Versorgungsspannung (U_{batt}) entsprechend der Vorgabe durch die Korrektureinheit (KE) in der Pulsweite (ID') reduzierbar sind.

5. Elektronisch kommutierbarer Motor nach Anspruch 3 oder 4, **dadurch gekennzeichnet, dass** die Korrektureinheit (KE) in die Steuereinheit (STE) integriert ist, die in Abhängigkeit von der Größe der Versorgungsspannung (U_{batt}) die PWM-Steuersignale (PWM_{end} bzw. PWM'_{end}) unverändert oder mit reduzierter Pulsweite (ID') an die Endstufen (EST) des Motors (M) abgibt.

6. Elektronisch kommutierbarer Motor nach einem der Ansprüche 1 bis 5, **dadurch gekennzeichnet, dass** die Reduzierung der Pulsweite (ID') der PWM-Steuersignale (PWM'_{end}) für die Endstufen (EST) des Motors (M)= in Abhängigkeit von der Größe der Drehzahl (N) des Motors (M) erfolgt.

## Claims

1. Electronically commutatable motor whose output stages (EST) can be driven via an electronic control unit (STE) by means of PWM control signals and are fed by a supply voltage (U_{batt}), wherein the pulse width (ID) of the PWM control signals can be reduced as a function of the magnitude of the supply voltage (U_{batt}) and a predefined setpoint value (PWMₛₑₜ) for the PWM control signals in such a way that the motor is protected against being overloaded, **characterized in that** the operating PWM control signals (PWM'_{end}) for the output stages (EST) are determined by the predefined operating setpoint value (PWMₛₑₜ) up to a rated voltage (U_{rated}) of the supply voltage (U_{batt}), and **in that** the pulse width (ID) of these PWM control signals (PWM'_{end}) can be reduced linearly or nonlinearly as the supply voltage (U_{batt}) increases only when the said rated voltage (U_{rated}) is exceeded.

2. Electronically commutatable motor according to Claim 1, **characterized in that** the pulse width (ID') is reduced by an ever larger drop as the predefined setpoint value (PWMₛₑₜ) is increased and the supply voltage (U_{batt}) rises.

3. Electronically commutatable motor according to either of Claims 1 and 2, **characterized in that** the control unit (STE) has an associated correction unit (KE) which passes on to the output stages (EST) of the motor the PWM control signals (PWM_{end}) which are determined in accordance with the predefined setpoint value (PWMₛₑₜ) for the output stages (EST) of the motor as a function of the magnitude of the supply voltage (U_{batt}) in unchanged form or in the form of reduced PWM control signals (PWM'_{end}).

4. Electronically commutatable motor according to Claim 3, **characterized in that** up until the rated voltage (U_{rated}) of the motor (M) is reached, the PWM control signals (PWM_{end}) for the output stages (EST) of the motor which are determined by the control unit (STE) on the basis of the predefined setpoint value (PWMₛₑₜ) can be passed on to the said output stages in unchanged form, and the pulse width (ID') of the said control signals can be reduced by the correction unit (KE) in accordance with the predefined values only as the supply voltage (U_{batt}) increases.

5. Electronically commutatable motor according to Claim 3 or 4, **characterized in that** the correction unit (KE) is integrated in the control unit (STE) which outputs the PWM control signals (PWM_{end} or PWM'_{end}) to the output stages (EST) of the motor (M) as a function of the magnitude of the supply voltage (U_{batt}) in unchanged form or with a reduced pulse width (ID').

6. Electronically commutatable motor according to one of Claims 1 to 5, **characterized in that** the pulse width (ID') of the PWM control signals (PWM'_{end}) for the output stages (EST) of the motor (M) is reduced as a function of the magnitude of the rotational speed (N) of the motor (M).

## Revendications

1. Moteur à commutation électronique, dont les étages de sortie (EST) peuvent être commandés par une unité de commande électronique (STE) au moyen de signaux de commande PWM et sont alimentés par une tension d'alimentation (U_{batt}), la largeur d'impulsion (ID) des signaux de commande PWM pouvant être réduite en fonction de la grandeur de la tension d'alimentation (U_{batt}) et d'une valeur de consigne prédéterminée (PWM_{cons}) pour les signaux de commande PWM, de sorte que le moteur soit protégé contre la surcharge,
**caractérisé en ce que**
jusqu'à une tension nominale (Uₙₒₘ) de la tension d'alimentation (U_{batt}), les signaux de commande PWM de fonctionnement (PWM'ₛₒᵣₜᵢₑ) pour les étages de sortie (EST) sont déterminés par la valeur de consigne de fonctionnement prédéterminée (PWM_{cons}), et la largeur d'impulsion (ID) de ces signaux de commande PWM (PWM'ₛₒᵣₜᵢₑ) ne peut être réduite d'une façon linéaire ou non linéaire avec l'augmentation de la tension d'alimentation (U_{batt}) que lors d'un dépassement de cette tension nominale (Uₙₒₘ).

2. Moteur à commutation électronique selon la revendication 1,
**caractérisé en ce que**
la réduction de la largeur d'impulsion (ID') avec l'augmentation de la valeur de consigne prédéterminée (PWM_{cons}) et la hausse de la tension d'alimentation (U_{batt}) est effectuée avec une chute croissante.

3. Moteur à commutation électronique selon l'une quelconque des revendications 1 à 2,
**caractérisé en ce qu'**
à l'unité de commande (STE) est associée une unité de correction (KE), qui transmet les signaux de commande PWM (PWMₛₒᵣₜᵢₑ) pour les étages de sortie (EST) du moteur déterminés selon la valeur de consigne prédéterminée (PWM_{cons}) aux étages de sortie (EST) du moteur sous une forme inchangée ou sous la forme de signaux de commande PWM réduits (PWM'ₛₒᵣₜᵢₑ) en fonction de la grandeur de la tension d'alimentation (U_{batt}).

4. Moteur à commutation électronique selon la revendication 3,
**caractérisé en ce que**
pour atteindre la tension nominale (Uₙₒₘ) du moteur (M), les signaux de commande PWM (PWMₛₒᵣₜᵢₑ) pour les étages de sortie (EST) du moteur, déterminés par l'unité de commande (STE) sur la base de la valeur de consigne prédéterminée (PWM_{cons}), doivent pouvoir être transmis à ceux-ci sous une forme inchangée et leur largeur d'impulsion (ID') ne peut être réduite avec l'augmentation de la tension d'alimentation (U_{batt}) qu'en correspondance avec l'instruction par l'unité de correction (KE).

5. Moteur à commutation électronique selon la revendication 3 ou 4,
**caractérisé en ce que**
l'unité de correction (KE) est intégrée dans l'unité de commande (STE), qui transmet les signaux de commande PWM (PWMₛₒᵣₜᵢₑ ou PWM'ₛₒᵣₜᵢₑ) sous une forme inchangée ou avec une largeur d'impulsion réduite (ID') aux étages de sortie (EST) du moteur en fonction de la grandeur de la tension d'alimentation (U_{batt}).

6. Moteur à commutation électronique selon l'une quelconque des revendications 1 à 5,
**caractérisé en ce que**
la réduction de la largeur d'impulsion (ID') des signaux de commande PWM (PWM'ₛₒᵣₜᵢₑ) pour les étages de sortie (EST) du moteur (M) est effectuée en fonction de la grandeur de la vitesse de rotation (N) du moteur (M).
